# FASCICULE DE BREVET EUROPEEN

(11) **EP 0 750 244 B1**
(45) Date de publication et mention de la délivrance du brevet: **29.04.1998**
(21) Numéro de dépôt: 96470009.0
(22) Date de dépôt: 17.06.1996
(51) Int. Cl.: G05F 3/20, H02M 3/07

(54) **Circuit générateur de tension négative du type pompe de charge**
Ladungspumpe-Generator-Schaltkreis für negative Spannung
Negative voltage generating charge pump circuit

(30) Priorité: 21.06.1995 FR 9507621
(43) Date de publication de la demande: 27.12.1996
(73) Titulaire: SGS-THOMSON MICROELECTRONICS S.A., 94250 Gentilly (FR)
(72) Inventeur: Guedj, Marc, 57000 Metz (FR); Brigati, Alessandro, 57000 Metz (FR); Aulas, Maxence, 57000 Metz (FR); Demange, Nicolas, 57000 Metz (FR)
(74) Mandataire: Schmit, Christian Norbert Marie

(56) Documents cités:
- EP-A- 0 217 065
- EP-A- 0 222 472
- US-A- 5 077 691
- US-A- 5 120 993

## Description

L'invention concerne un circuit générateur de tension négative du type pompe de charge.

On voit actuellement se développer dans des circuits intégrés l'emploi de circuits générateurs de haute tension négative du type pompe de charge. Ainsi, par exemple, le brevet US-A-5 077 691 décrit une telle pompe et son application pour la programmation d'une mémoire EEPROM de type flash.

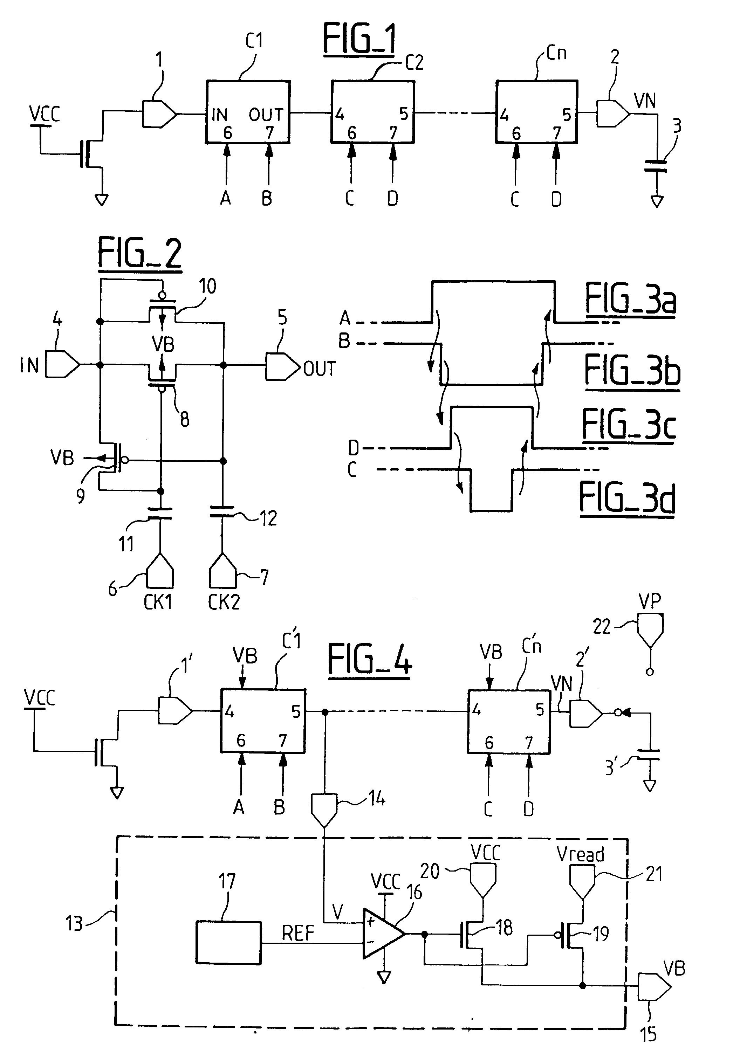

La figure 1 illustre schématiquement une structure de pompe connue, réalisée en technologie MOS à partir d'un substrat de type P. Elle comprend un ensemble de n (n nombre entier) cellules élémentaires C1 à Cn, dont la structure est illustrée figure 2. Ces cellules sont montées en série entre une entrée 1 et une sortie 2. Le but d'un tel circuit est classiquement d'alimenter un circuit de type capacitif, schématisé sur la figure 1 par une capacité 3, avec une tension négative VN produite à partir d'une tension d'alimentation positive VCC et d'une tension de référence ou masse. Ces cellules reçoivent des signaux de pilotages A, B, C, D (illustrés sur les chronogrammes 3a à 3d) commutant cycliquement entre 0 volts (masse) et VCC.

Une cellule élémentaire, illustrée sur la figure 2, comprend:
- une entrée 4 pour recevoir une tension IN,
- une sortie 5 pour fournir une tension OUT, et
- deux entrées 6 et 7 pour recevoir des signaux d'horloge CK1 et CK2.

La cellule illustrée figure 2 comprend:
- un premier transistor 8 de type P dont la source est reliée à l'entrée 4 et dont le drain est relié à la sortie 5,
- un deuxième transistor 9 de type P dont le drain est relié à l'entrée 4, dont la source est reliée à la grille de commande du transistor 8, et dont la grille de commande est reliée à la sortie 5,

un troisième transistor 10 de type P monté en diode, dont la source et la grille de commande sont reliées à l'entrée 4, et dont le drain est relié à la sortie 5,
une première capacité 11 dont un premier pôle est relié à la grille de commande du transistor 8, et dont le deuxième pôle est relié à l'entrée 6,
une deuxième capacité 12 dont un premier pôle est relié à la sortie 5, et dont le deuxième pôle est relié à l'entrée 7.

En pratique, les capacités 11 et 12 sont réalisées à l'aide de transistors de type P, le premier pôle de ces capacités correspondant à une grille de commande et le deuxième pôle correspondant à un drain et une source reliés entre eux.

Les signaux CK1 et CK2 seront soit respectivement les signaux A et B illustrés figures 3a et 3b, soit les signaux C et D illustrés figure 3d et 3c.

En supposant que les signaux A et C sont initialement à 0 et que les signaux B et D sont initialement à VCC, les signaux A, B, C, et D sont tels que:
- la montée à VCC du signal A entraîne la descente à 0 du signal B,
- la descente à 0 du signal B entraîne la montée à VCC du signal D,
- la montée à VCC du signal D entraîne la descente à 0 du signal C, ce signal C remontant à VCC après un certain délai,
- la remontée à VCC du signal C entraîne la descente à 0 du signal D,
- la descente du signal D entraîne la montée à VCC du signal B,
- la montée à VCC du signal B entraîne la descente à 0 du signal A, ce signal A remontant postérieurement à VCC et ainsi de suite.

Dans une cellule, les charges négatives sont transférées de l'entrée 4 sur front descendant du signal CK1 (c'est à dire de A ou de C), le transistor 8 étant alors passant. Sur front montant de ce signal CK1 le transistor 8 est bloqué. Sur front descendant du signal CK2 (c'est à dire de B ou de D), la tension de sortie OUT augmente en valeur absolue de VCC.

Des cellules consécutives recevant des signaux de polarités opposées sur leurs entrées 6 et 7, elles sont successivement reliées deux à deux. Chaque cellule est alternativement reliée à celle qui lui succède et à celle qui la précède. L'entrée de première cellule C1 est reliée à l'entrée 1, celle-ci étant reliée à la masse. On transfère progressivement les charges négatives d'une cellule à l'autre et la tension de sortie négative Vn (tension présente en sortie de la dernière cellule Cn) va progressivement croître en valeur absolue.

Comme on l'a dit, la pompe est réalisée sur un substrat de type P. Classiquement, on polarise donc positivement les caissons des transistors de type P pour s'assurer qu'ils puissent être passants. Cette polarisation est réalisée par exemple en reliant les caissons à une ligne conductrice commune réalisée sur une couche de métallisation du circuit MOS.

On limite généralement le potentiel des caissons, noté VB. Cela permet de ne pas créer des champs grille-caisson trop importants, et donc de ne pas risquer de détruire les transistors PMOS. D'autre part, il est préférable de limiter le potentiel des caissons si on produit des tensions négatives importantes, par exemple de -10 à -15 volts. Une différence de potentiel trop importante entre les caissons et les zones actives des transistors des cellules de pompage risque d'engendrer une destruction de ces transistors si elle atteint la tension de claquage de ces transistors. Enfin, la limitation du potentiel des caissons permet de limiter les pertes dans les transistors dues à l'effet de substrat. Cette limitation de l'effet de substrat permet de réaliser une pompe plus compacte, le nombre de cellules nécessaires pour produire une tension de valeur donnée étant d'autant moins important que les pertes dans ces transistors sont faibles. Par ailleurs, l'existence de commutations dans les transistors 8 des cellules de pompage est conditionnée par le fait que la tension d'alimentation est supérieure aux pertes, exprimées en valeur absolue, dans ces transistors. La limitation de l'effet de substrat permet donc de réaliser une pompe qui fonctionne pour des valeurs de tension d'alimentation plus faibles.

La limitation du potentiel VB ne pose pas de problème tant que le circuit capacitif alimenté en sortie de pompe n'est relié qu'à cette pompe. Or, dans des circuits tels que celui décrit par exemple dans le brevet US-A-5 077 691, le circuit capacitif en question est formé des grilles de transistors de mémorisation pouvant être également connectées à des circuits d'alimentation produisant des tensions positives. De ce fait, il se peut que lorsqu'on relie la sortie 2 de la pompe au circuit capacitif 3, celui-ci soit chargé positivement à une tension VP. Pendant une phase transitoire, on va décharger les charges positives au travers des cellules Cn à C1 de la pompe, de sa sortie 2 vers son entrée 1. Si la tension VP est supérieure à la tension de polarisation VB souhaitée des caissons des transistors des cellules de la pompe, on risque de voir apparaître un phénomène de déverrouillage (ou latchup en anglais) par création de transistor PNP parasites entre le substrat et les zones actives des transistors de type P des cellules. Une solution est de polariser les caissons de telle sorte que ce risque de latchup soit éliminé, c'est à dire concrètement à choisir VB tel que VB soit toujours supérieur à VP. Par rapport à une pompe n'alimentant pas de circuit capacitif pouvant être chargé positivement, on risque, pour éviter le risque de latchup, d'être amené à augmenter le nombre de cellules de la pompe (l'effet substrat étant plus important dans les transistors des cellules de pompage) ou à limiter la valeur de la tension produite par la pompe (pour éviter un risque de claquage des transistors).

Pour éviter le phénomène de latch-up, les solutions suivantes sont connues:

Le document EP-A-0 217 065 décrit un circuit de polarisation de substrat dans lequel la tension de substrat est vérrouillée de manière à ne pas dépasser une valeur maximale.

Le document EP-A-0 222 472 décrit un circuit de surveillance de la tension de polarisation d'un substrat de type P qui déconnecte un circuit élévateur de tension lorsque la tension de substrat devient trop positive.

Un but de l'invention est de proposer une structure de pompe qui permette de limiter le potentiel de polarisation des caissons, tout en ne présentant pas de risque de latchup.

Ainsi, l'invention concerne un circuit générateur de tension négative du type pompe de charge, réalisé à partir d'un substrat de type P, et fournissant sur une sortie une tension négative par pompage de charges négatives dans n cellules de pompage montées en série, n étant un nombre entier, ces cellules de pompage comprenant des transistors de type P dont les caissons sont reliés à un noeud pour être polarisés positivement, caractérisé en ce qu'il comprend des moyens de commutation pour fournir sélectivement sur le noeud une tension de polarisation des caissons supérieure ou égale au potentiel présent en sortie tant que ce potentiel est supérieur à une tension de référence positive, et pour fournir une tension de polarisation des caissons plus faible quand le potentiel présent en sortie est inférieure à la dite tension de référence.

D'autres particularités et avantages apparaîtront à la lecture de la description qui suit, à lire conjointement aux dessins annexés dans lesquels:
- la figure 1 représente schématiquement une pompe de charge négative selon l'état de l'art,
- la figure 2 représente un schéma détaillé d'une cellule de base de la pompe de la figure 1,
- les figures 3a à 3d représentent des chronogrammes de signaux de pilotage de la pompe de la figure 1,
- la figure 4 représente schématiquement une pompe selon l'invention.

La figure 1 illustre schématiquement une structure de pompe connue, réalisée en technologie MOS à partir d'un substrat de type P. Elle comprend un ensemble de n (n nombre entier) cellules élémentaires de pompage C1 à Cn, dont la structure est illustrée figure 2. Ces cellules sont montées en série entre une entrée 1 et une sortie 2. Le but d'un tel circuit est classiquement d'alimenter un circuit de type capacitif, schématisé sur la figure 1 par une capacité 3, avec une tension négative VN produite à partir d'une tension d'alimentation positive VCC et d'une tension de référence ou masse. Ces cellules reçoivent des signaux de pilotages A, B, C, D (illustrés sur les chronogrammes 3a à 3d) commutant cycliquement entre 0 volt (masse) et VCC.

Une cellule élémentaire, illustrée sur la figure 2, comprend une entrée 4 pour recevoir une tension IN, une sortie 5 pour fournir une tension OUT, et deux entrées 6 et 7 pour recevoir des signaux d'horloge CK1 et CK2.

La cellule illustrée figure 2 comprend un premier transistor de type P 8 dont la source est reliée à l'entrée 4 et dont le drain est relié à la sortie 5. Elle comprend un deuxième transistor 9 de type P dont le drain est relié à l'entrée 4, dont la source est reliée à la grille de commande du transistor 8, et dont la grille de commande est reliée à la sortie 5. La cellule comprend encore un troisième transistor 10 de type P monté en diode, dont la source et la grille de commande sont reliées à l'entrée 4, et dont le drain est relié à la sortie 5. Elle comprend aussi une première capacité 11 dont un premier pôle est relié à la grille de commande du transistor 8, et dont le deuxième pôle est relié à l'entrée 6, et une deuxième capacité 12 dont un premier pôle est relié à la sortie 5, et dont le deuxième pôle est relié à l'entrée 7.

En pratique, les capacités 11 et 12 sont réalisées à l'aide de transistors de type P, le premier pôle de ces capacités correspondant à une grille de commande et le deuxième pôle correspondant à un drain et une source reliés entre eux.

Les signaux CK1 et CK2 seront soit respectivement les signaux A et B illustrés figures 3a et 3b, soit les signaux C et D illustrés figures 3d et 3c.

En supposant que les signaux A et C sont initialement à 0 et que les signaux B et D sont initialement à VCC, les signaux A, B, C, et D sont tels que :
- la montée à VCC du signal A entraîne la descente à 0 du signal B,
- la descente du signal B entraîne la montée à VCC du signal D,d et
- la montée à VCC du signal D entraîne la descente à 0 du signal C, ce signal C remontant à VCC après un certain délai,
- la remontée à VCC du signal C entraîne la descente à 0 du signal D,
- la descente à 0 du signal D entraîne la montée à VCC du signal B,
- la montée à VCC du signal B entraîne la descente à 0 du signal A, ce signal A remontant postérieurement à VCC et ainsi de suite.

Dans une cellule, les charges négatives sont transférées de l'entrée 4 sur front descendant du signal CK1 (c'est à dire de A ou de C), le transistor 8 étant alors passant. Sur front montant de ce signal CK1 le transistor 8 est bloqué. Sur front descendant du signal CK2 (c'est à dire de B ou de D), la tension de sortie OUT augmente en valeur absolue de VCC.

Des cellules consécutives recevant des signaux de polarités opposées sur leurs entrées 6 et 7, elles sont successivement reliées deux à deux. Chaque cellule est alternativement reliée à celle qui lui succède et à celle qui la précède. L'entrée de la première cellule C1 est reliée à l'entrée 1 de la pompe, cette entrée 1 étant reliée à la masse. On transfère progressivement les charges négatives d'une cellule à l'autre et la tension de sortie négative Vn, fournie en sortie de la dernière cellule Cn, va progressivement croître en valeur absolue.

La figure 4 représente schématiquement une pompe de charge réalisée conformément à l'invention. Sa structure est identique à celle de la figure 1, mais elle comporte un circuit supplémentaire 13. La pompe de charge illustrée figure 4 comprend un ensemble de n (n nombre entier) cellules élémentaires de pompage C'1 à C'n, dont la structure est illustrée figure 2. Ces cellules sont montées en série entre une entrée 1' et une sortie 2'. La pompe alimente un circuit de type capacitif, représenté sur la figure 4 par une capacité 3', avec une tension négative VN produite à partir d'une tension d'alimentation positive VCC et d'une tension de référence ou masse. Ces cellules reçoivent des signaux de pilotages A, B, C, D (illustrés sur les chronogrammes 3a à 3d) commutant cycliquement entre 0 volts (masse) et VCC.

Les caissons des transistors de type P des cellules C'1 à C'n sont reliés par des moyens conducteurs non représentés (par exemple une ligne conductrice réalisée sur une couche métallique du circuit) à un noeud 15 pour recevoir un potentiel positif de caisson VB. Le noeud 15 correspond à une sortie du circuit 13.

De préférence, le circuit 13 comprend un comparateur 16 pour comparer une tension V, reçue sur une entrée 14 du circuit 13, à une tension de référence REF. Cette tension de référence REF sera produite de préférence par un circuit 17 de type bandgap (non décrit en détail, ce type de circuit étant bien connu de l'homme de métier), ce qui permet de produire une tension de référence stable en température et indépendante de la tension d'alimentation VCC (tant que la tension REF à produire est inférieure à VCC, bien entendu).

La sortie du comparateur 16 est reliée à des interrupteurs MOS 18 et 19 afin de relier sélectivement le noeud 15 soit à une première borne 20 soit à une deuxième borne 21, ces deux bornes fournissant des tensions positives de valeurs différentes.

Supposons que le circuit capacitif 3' puisse recevoir soit la tension VN produite par la pompe, soit une tension positive VP présente sur une borne 22. Il se peut que lorsqu'on relie la sortie 2' de la pompe au circuit capacitif 3', celui-ci soit chargé positivement à la tension VP. On a alors VN = VP (en considérant que VN est la tension présente sur la sortie 2'). Pendant une phase transitoire, on va décharger les charges positives au travers des cellules C'n à C'1 de la pompe, de sa sortie 2' vers la masse à laquelle est reliée l'entrée 1'. Si la tension VP est supérieure à la tension de polarisation VB des caissons des transistors des cellules C'1 à C'n de la pompe, on risque de voir apparaître un phénomène de déverrouillage (ou latchup en Anglais) par création de transistors PNP parasites entre le substrat et les zones actives des transistors de type P des cellules.

Afin d'éviter que ce phénomène apparaisse, on relie alors le noeud 15, auquel sont reliés les caissons des transistors P des cellules, à la borne 20, celle-ci fournissant une tension supérieure ou égale à VP. L'interrupteur 18 est alors fermé et l'interrupteur 19 est ouvert. Par exemple, si VP est inférieure ou égale à VCC, la borne 20 fournit la tension VCC. Le comparateur 16 sera alimenté entre la masse et la tension VCC. La tension VP pourra très bien être supérieure à VCC. Dans ce cas on alimentera en conséquence le comparateur 16 et la borne 20 fournira une tension supérieure à VCC. On reliera par exemple la borne 20 à la borne 22.

Comme on l'a vu il est préférable de limiter la valeur de la tension VB à une valeur positive donnée afin de ne pas créer un champ grille-caisson trop important dans les transistors, ce qui risque de les détruire, rendant la pompe inopérante. Par exemple on choisira d'avoir VB = Vread = 2.2 volts, avec VCC = 5 volts, la tension Vread étant la tension fournie par la borne 21.

Tant que la tension V reçue par le comparateur 16 est supérieure au potentiel Vread le noeud 15 est relié à la borne 20. Une fois la tension V égale ou inférieure à Vread on relie le noeud 15 à la borne 21. L'interrupteur 19 est alors fermé et l'interrupteur 18 est ouvert. On choisira REF ≥ Vread (par exemple REF = 1.8 volts). La tension V prélevée sera de préférence la tension présente en sortie de la première cellule C'1 de la pompe afin d'être sûr qu'il n'existe aucun risque d'apparition de phénomène de latchup dans aucune des n cellules de la pompe.

## Revendications

1. Circuit générateur de tension négative du type pompe de charge, réalisé à partir d'un substrat de type P, et fournissant sur une sortie (2') une tension négative (VN) par pompage de charges négatives dans n cellules de pompage (C'1 à C'n) montées en série, n étant un nombre entier, ces cellules de pompage comprenant des transistors de type P dont les caissons sont reliés à un noeud (15) pour être polarisés positivement,
caractérisé en ce qu'il comprend des moyens de commutation (18, 19) pour fournir sélectivement sur le noeud (15) une tension (VB) de polarisation des caissons supérieure ou égale au potentiel présent en sortie tant que ce potentiel est supérieur à une tension de référence positive (REF), et pour fournir une tension de polarisation des caissons plus faibles (Vread) quand le potentiel présent en sortie est inférieure à la dite tension de référence.

2. Circuit selon la revendication 1, caractérisé en ce que les moyens de commutation comprennent des interrupteurs de type MOS (18, 19) pour relier sélectivement le noeud (15) à des bornes (20, 21) fournissant des tensions positives de valeurs différentes, de sorte que le noeud (15) soit relié à une seule des bornes à la fois.

3. Circuit selon la revendication 2, caractérisé en ce qu'il comprend un comparateur (16) ayant une première entrée reliée à une sortie d'une des cellules de pompage, une deuxième entrée recevant la tension de référence (REF), et une sortie pour commander les interrupteurs (18, 19).

4. Circuit selon la revendication 3, caractérisé en ce que la première entrée du comparateur (16) est reliée à la sortie de la première cellule de pompage (C'1).

## Patentansprüche

1. Generatorschaltkreis für eine negative Spannung vom Ladungspumpentyp, der aufgebaut ist auf einem p-Substrat und an einem Ausgang (2') durch Pumpen negativer Ladungen in n in Reihe geschalteten Pumpzellen (C'1 bis C'n), wobei n eine ganze Zahl ist, eine negative Spannung (VN) ausgibt, wobei die Pumpzellen p-Transistoren umfassen, deren Wannen mit einem Knoten (15) verbunden sind, so daß sie positiv vorgespannt sind,
dadurch gekennzeichnet, daß
er Umschaltvorrichtungen (18, 19) für das selektive Ausgeben einer Spannung (VB) zur Vorspannung der Wannen auf den Knoten (15) umfaßt, die größer oder gleich dem Potential am Ausgang ist, so lange das Potential größer als eine positive Referenzspannung (REF) ist, und um eine kleinere Vorspannung (Vread) für die Wannen auszugeben, während das am Ausgang anliegende Potential kleiner als die Referenzspannung ist.

2. Schaltkreis nach Anspruch 1, dadurch gekennzeichnet, daß die Schaltvorrichtungen Unterbrecher vom MOS-Typ (18, 19) umfassen, um selektiv den Knoten (15) mit den Anschlüssen (20, 21) zu verbinden, die positive Spannungen unterschiedlicher Höhe ausgeben, so daß der Knoten (15) mit einem einzigen Anschluß zur Zeit verbunden ist.

3. Schaltkreis nach Anspruch 2, dadurch gekennzeichnet, daß er einen Komparator (16) umfaßt, bei dem ein erster Eingang mit einem Ausgang einer der Pumpzellen verbunden ist, bei dem ein zweiter Eingang auf der Referenzspannung (REF) liegt und der einen Ausgang zum Ansteuern der Unterbrecher (18, 19) umfaßt.

4. Schaltkreis nach Anspruch 3, dadurch gekennzeichnet, daß der erste Eingang des Komparators (16) mit dem Ausgang der ersten Pumpzelle (C'1) verbunden ist.

## Claims

1. A negative voltage generator circuit of the charge-pumping type, made from a type P substrate, and supplying to an output (2') a negative voltage (VN) by pumping negative charges into n pumping cells (C'1 to C'n) connected in series, n being a whole number, these pumping cells comprising type P transistors, the enclosures of which are connected to a node (15) to be positively biassed,
**characterised in that** it comprises switching means (18, 19) for selectively providing to the node (15) a voltage (VB) for biasing the enclosures which is greater than or equal to the potential present at the output as long as this potential is greater than a positive reference voltage (REF), and for supplying a weaker voltage (Vread) for biasing the enclosures when the potential present at the output is less than the said reference voltage.

2. A circuit according to Claim 1,
**characterised in that** the switching means comprise MOS type switches (18, 19) for selectively connecting the node (15) to terminals (20, 21) supplying positive voltages of different values, so that the node (15) is connected to a single one of the terminals at the same time.

3. A circuit according to Claim 2,
**characterised in that** it comprises a comparator (16) having a first input connected to an output of one of the pumping cells, a second input receiving the reference voltage (REF), and an output for controlling the switches (18, 19).

4. A circuit according to Claim 3,
**characterised in that** the first input of the comparator (16) is connected to the output of the first pumping cell (C'1).
